# EUROPÄISCHE PATENTSCHRIFT

(11) **EP 3 283 590 B1**
(45) Veröffentlichungstag und Bekanntmachung des Hinweises auf die Patenterteilung: **05.01.2022**
(21) Anmeldenummer: 16729759.7
(22) Anmeldetag: 12.04.2016
(51) Int. Cl.: C09J 5/00, C09J 7/00, C09J 163/00, B29C 65/48

(54) **LASTOPTIMIERTE KLEBEVERBINDUNG UND VERFAHREN ZUR HERSTELLUNG EINER LASTOPTIMIERTEN KLEBEVERBINDUNG**
STRESS-OPTIMIZED ADHESIVE CONNECTION AND METHOD FOR PRODUCING A STRESS-OPTIMIZED ADHESIVE CONNECTION
LIAISON ADHÉSIVE À CHARGE OPTIMALE ET PROCÉDÉ SERVANT À FABRIQUER UNE LIAISON ADHÉSIVE À CHARGE OPTIMALE

(30) Priorität: 12.04.2015 DE 102015105553
(43) Veröffentlichungstag der Anmeldung: 21.02.2018
(73) Patentinhaber: Leibniz-Institut für Polymerforschung Dresden e.V., 01069 Dresden (DE); ATN Hölzel GmbH, 02736 Oppach (DE)
(72) Erfinder: KNAPP, André, 01157 Dresden (DE); LUCIA, Martin, 01157 Dresden (DE); BRANDLER, Thomas, 02736 Oppach (DE)
(74) Vertreter: Weissfloh, Ingo
(86) Internationale Anmeldenummer: PCT/DE2016/100172
(87) Internationale Veröffentlichungsnummer: WO 2016/165691

(56) Entgegenhaltungen:
- DE-A1-102008 024 804
- GB-A- 1 520 873

## Beschreibung

Die Erfindung betrifft eine lastoptimierte Klebeverbindung und ein Verfahren zur Herstellung einer lastoptimierten Klebeverbindung unter Verwendung eines einzigen Klebstoffes durch Variation der Komponentenverhältnisse angepasst an die auftretenden Spannungen, insbesondere bei flächigen Bauteilen oder Baugruppen mit ein-, zwei- oder mehrschnittigen Überlappungen.

Bei sich einschnittig, zweischnittig oder mehrschnittig überlappenden Klebeverbindungen oder konzentrischen Klebeverbindungen mit Scherbelastungen und/oder Schälbelastungen treten unter Verwendung von strukturellen Klebstoffen, welche bei strukturellen Klebeverbindungen, eingesetzt werden, die eine konstruktive Gestaltung hochsteifer Konstruktionsklebungen hoher Festigkeit, mit hoher Festigkeit bzw. Steifigkeit ermöglichen. Bei Belastung der Klebeschicht treten Beanspruchungen in Form mechanischer Spannungen auf, welche ungleichmäßig verteilt sind und ihren höchsten Wert (Spannungsspitze) jeweils an den Überlappungsenden haben. Diese Spannungsspitzen führen zu einer ungleichmäßigen Spannungsverteilung in der Klebeschicht und somit zu einer geringeren Festigkeit als dies bei gleichmäßiger Spannungsverteilung der Fall wäre.

Bei flächigen Klebeverbindungen tritt das Problem auf, dass die Klebeverbindungen an einem Rand beziehungsweise mehreren Rändern stärker beansprucht werden als in anderen Bereichen, wie in der Mitte der Klebefläche.

Die Beanspruchung der Klebeverbindung in unterschiedlichen Bereichen der Klebefläche wird von der Art der Belastung, Klebeschichtstärke und der Steifigkeit der verklebten Bauteile beeinflusst.

Infolge der unterschiedlichen Beanspruchungen in verschiedenen Bereichen der Klebeverbindung kommt es in der Regel am Rand bzw. an den Rändern zu einer Rissbildung mit anschließendem Risswachstum und so zur Zerstörung der Klebeverbindung.

Insbesondere bei herkömmlichen Klebeverbindungen an sich überlappenden Bauteilen mit einer Überlappungslänge, die ein Vielfaches der in DIN-1465 angegebenen Überlappungslänge besitzt, kommt es zu ungünstigen Spannungsverteilungen innerhalb der Klebeverbindung und den zu fügenden Bauteilen.

Klebeverbindungen sind in unterschiedlichen Ausführungen bekannt.

So ist aus der DE 102008024804 A1 ein Klebemittel bekannt, dass über die Klebefläche verteilt mit verschiedenen Klebstoffen unterschiedlicher Eigenschaften versehen ist. Dazu ist entsprechend vorgesehen, dass der Klebebereich wenigstens einen ersten Teilbereich mit einem ersten Klebstoff und wenigstens einen zweiten Teilbereich mit einem zweiten Klebstoff aufweist und dass der erste Klebstoff und der zweite Klebstoff unterschiedliche Klebstoffeigenschaften aufweisen. Mit der vorgeschlagenen Lösung soll eine hohe Temperatur-Standfestigkeit, eine gute Dauerhaftigkeit und eine hohe Anfangshaftung erreicht werden. Die beschriebene Wirkung wird nur unter Zuhilfenahme von zwei unterschiedlichen Klebstoffen erreicht. Eine Reduzierung der Spannungsspitzen der Klebeverbindungen wird nicht dargestellt. Zudem werden die Klebstoffe mittels Klebebänder als Trägermedium aufgetragen, wodurch bestimmte Klebstoffe nicht oder nur sehr aufwändig zum Einsatz kommen können. Eine Optimierung bezüglich der Festigkeit bei wechselnden Lasten ist jedoch nicht möglich.

Weiterhin offenbart die DE 101 26 743 A1 eine Klebeverbindung mit zwei Klebstoffen, wobei die Klebstoffe einerseits eine feste Verbindung bilden und anderseits eine Abdichtung bewirken sollen. Hierbei werden unterschiedliche Klebstoffe verwendet, welche aufgrund ihrer Zusammensetzung keinen kontinuierlichen Steifigkeitsverlauf ermöglichen. Zudem härten diese Klebstoffe unterschiedlich aus. Eine Anwendung zur Optimierung bezüglich der Festigkeit bei wechselnden Lasten ist allerdings nicht möglich. Eine nachteilige Wechselwirkung der unterschiedlichen Klebstoffe ist nicht ausgeschlossen.

Weiterhin offenbart die DE 103 13 835 A1 eine Baueinheit mit einem Rahmenteil und einem Abschlussteil, wobei das Rahmenteil und das Abschlussteil aus Materialien mit unterschiedlichen Wärmeausdehnungskoeffizienten bestehen und miteinander verklebt werden, wobei zur Sicherstellung einer zuverlässigen Klebeverbindung Mittel in Form von Begrenzern vorgesehen sind, welche eine definierte Spaltdicke für eine ausreichende Dicke der Klebeschicht gewährleisten sollen.

Die Aufgabe der Erfindung besteht darin, eine verbesserte Lösung für eine Klebeverbindung für die flächige Verklebung von Bauteilen bereitzustellen, bei denen die Klebeverbindung in verschiedenen Bereichen der Klebefläche eine ungleichmäßige Verteilung der Beanspruchung aufweist. Entsprechend der Beanspruchung, wie die Spannungsverteilung, soll ein Klebstoff in seinen Eigenschaften möglichst gut an den Spannungsverlauf innerhalb der Klebefläche anpassbar sein, wobei vorteilhafte Wechselwirkungen zwischen den jeweiligen Klebstoffanpassungen genutzt werden sollen.

Erfindungsgemäß wird die Aufgabe mit den Merkmalen des Hauptanspruchs gelöst.

Bei der erfindungsgemäßen lastoptimierten Klebeverbindung zur überlappenden Verbindung von zumindest zwei Bauteilen unter Verwendung eines einzigen Klebstoffes, der mindestens zwei Komponenten umfasst, wobei die Komponenten miteinander vermischt sind und der Klebstoff auf zumindest einem der Bauteile zumindest im Bereich der Überlappung der Bauteile als Klebefläche aufgetragen ist und die Bauteile entsprechend überlappend zusammengefügt sind und der Klebstoff aushärtbar ist, dadurch gekennzeichnet, dass der Klebstoff ein Epoxidharzklebstoff ist, der unterschiedliche über das Komponentenmischungsverhältnis eingestellte Steifigkeiten entsprechend der Spannungsverteilung in unterschiedlichen Bereichen der Klebefläche besitzt, wobei entsprechend einer mechanischen Beanspruchung der Klebeverbindung in zwei, drei oder mehreren Bereichen der Klebefläche (4) der Klebstoff (14) in diesen Bereichen der Klebefläche (4) entsprechende Komponentenmischungsverhältnisse (1, 2, 3, n) besitzt.

Durch die entsprechenden Bereiche der unterschiedlichen Komponentenmischungen entsteht dabei eine sogenannte graduierte Klebeverbindung, wobei hierunter die bereichsweise Anordnung der unterschiedlichen Komponentenmischungsverhältnisse zu verstehen ist. (und weniger ein schrittweiser Verlauf der sich aus den unterschiedlichen Komponentenmischungsverhältnissen ergebender Spannungsverlauf)

Die mechanische Beanspruchung der Klebeverbindung resultiert aus der Belastung der Bauteile durch beispielsweise Druck, Zug und Schälung, welche sich auch direkt auf die Klebeverbindung auswirkt und diesen Belastungen standhalten soll.

Als Klebstoff wird ein zweikomponentiges Produkt der Klebstoffgruppe der Epoxidharze verstanden, welches handelsüblich ist und dessen beide wesentliche Komponenten Epoxidharz und Härter dabei in einem individuellen Verhältnis mischbar sind. Für die lastoptimierte Klebeverbindung wird in unterschiedlichen Bereichen der Klebefläche der Klebstoff mit jeweils unterschiedlichen Komponentenmischungsverhältnissen verwendet, die damit jeweils entsprechende mechanische Eigenschaften besitzen und damit eine strukturelle Verklebung ermöglichen. Für die lastoptimierte bzw. graduierte Klebeverbindung wird die Eigenschaftsveränderung des Klebstoffes gerichtet bzw. gezielt ausgenutzt, welche in den Grenzen der Komponentenmischungsverhältnisse, die zur Erreichung der jeweiligen mechanischen Eigenschaften erforderlich sind. Die zu verändernde mechanische Eigenschaft bezieht sich insbesondere auf die Steifigkeit, welche durch die jeweilige Komponentenmischung des Klebstoffes erzielt werden kann.

Die gefundene Lösung für die lastoptimierte Klebeverbindung zeichnet sich dadurch aus, dass ein Klebstoff, jedoch mit unterschiedlichen über das Komponentenmischungsverhältnis eingestellten Steifigkeiten entsprechend der Spannungsverteilung in unterschiedlichen Bereichen der Klebefläche zum Einsatz kommt. In den stärker beanspruchten Bereichen werden Komponentenmischungen mit geringerer Steifigkeit und in Bereichen geringer Beanspruchung Klebstoffe höherer Steifigkeit verwendet. Auf diese Weise wird eine strukturelle Verklebung erreicht.

So werden in Bereichen höherer Spannungen, wie beispielsweise am Rand, Komponentenmischungen geringerer Steifigkeit und Komponentenmischungen höherer Steifigkeit im Bereich geringerer Spannungen, wie beispielsweise in der Mitte der Klebefläche, verwendet, was einer örtklichfunktionellenStrukturierung der Klebeverbindungen entspricht.

Bei einer flächigen Verklebung treten am Rand die höchsten Spannungen auf. In der Mitte treten besonders bei großen Überlappungslängen de facto keine Spannungen auf. Wenn die Randbereiche elastischer verklebt sind und nachgeben, wird erreicht, dass auch die zentralen Bereiche der Klebeverbindung mit beansprucht werden.

Klebstoffe der Klebstoffgruppe der Epoxidharze besitzen den Vorteil, dass es zwischen den unterschiedlichen Komponentenmischungsverhältnissen des Klebstoffes der jeweils benachbarten Bereiche der Klebefläche zu keinen nachteiligen Wechselwirkungen bei einer Berührung oder einer Überlappung und damit zu einer Überlagerung kommt, da jeweils die chemisch gleichen Komponenten enthalten sind, welche sich nur hinsichtlich der jeweiligen Menge auf Grund des Komponentenmischungsverhältnisses unterscheiden. Ein sich Vermischen bzw. Diffundieren der Komponenten in das jeweils benachbarte Komponentenmischungsverhältnis ist möglich und zulässig. Es ergeben sich in den Übergangsbereichen bzw. Überlappungen Komponentenmischungsverhältnisse, welche gewissermaßen als vermittelndes Bindeglied zwischen den Komponentenmischungsverhältnissen liegen und deren unterschiedliche Steifigkeit verbinden und als Zwischenbereich ausgleichen.

Entsprechend verteilen sich die resultierenden, auf die Klebeverbindung wirkenden Spannungen gleichmäßiger über die Klebefläche, was zu einer Steigerung der Leistungsfähigkeit der Klebeverbindung führt. Demzufolge können die Klebefläche und somit die Überlappungsbereiche der Bauteile reduziert werden, wodurch neben der Reduzierung des einzusetzenden Klebstoffes auch eine Einsparung hinsichtlich der Materialstärke der zu fügenden Bauteile erreicht oder die Sicherheit hinsichtlich des Versagens der Klebeverbindung erhöht werden. Durch die gefundene Lösung wird einerseits die Festigkeit und die Sicherheit der Klebeverbindung bei einer konstruktiv unveränderten Fügeverbindung erhöht oder eine materialsparende Fügeverbindung bei gleichbleibender Festigkeit und Sicherheit erreicht.

Lastoptimierte bzw. gradierte Klebeverbindungen besitzen das Potenzial strukturelle Verklebungen zukünftig mit einer höheren Designfreiheit zu gestalten. So lassen sich beispielsweise damit jetzt bei größeren Überlappungslängen die Belastbarkeit steigern, die Verklebungsfläche bei gleichbleibender Belastung reduzieren oder bei gleicher Belastung durch größere Überlappungslängen der Bauteile die Klebschichtbreite reduzieren, da mit der herkömmlichen Technologie Spannungsspitzen ab einer bestimmten Überlappungslänge der Bauteile zum Versagen des Bauteils bzw. der Klebeverbindung führen.

Der nebengeordnete Anspruch betrifft ein Verfahren zur Herstellung einer lastoptimierten bzw. graduierten Klebeverbindung von zumindest zwei Bauteilen unter Verwendung eines einzigen Klebstoffes, der mindestens zwei Komponenten umfasst und der Klebstoff auf zumindest einem der Bauteile zumindest im Bereich der Überlappung der Bauteile als Klebefläche aufgetragen wird und die Bauteile entsprechend überlappend zusammengefügt werden und der Klebstoff aushärtet, wobei die Komponenten in jeweils unterschiedlichen Verhältnissen zueinander gemischt werden und der Klebstoff mit den jeweils unterschiedlichen Komponentenmischungsverhältnissen in verschiedenen Bereichen der Klebefläche der zu verklebenden Bauteile entsprechend der Beanspruchung der Klebeverbindung aufgebracht werden und nachfolgend die zu verklebenden Bauteile zusammengefügt werden.

Geeignet für das Verfahren zur Herstellung einer lastoptimierten bzw. graduierten Klebeverbindung sind Epoxidharzklebstoffe deren Härtungsreaktionen als Polyadditionsreaktionen von Epoxidharzen auf Basis von Bisphenol A (auch Mischungen mit Bisphenol F) mit polyfunktionellen Aminen basiert.

Ungeeignet sind 2K-Acrylatklebstoffe welche unter radikalischer Kettenpolymerisation härten und in der Regel ein festes nicht veränderbares Komponentenverhältnis aufweisen.

Weitere vorteilhafte Ausgestaltungen der Erfindung sind in den Unteransprüchen offenbart.

Vorteilhaft sind die jeweiligen Bereiche der Klebefläche hinsichtlich der Komponentenmischungsverhältnisse symmetrisch ausgeführt. Somit lassen sich auch symmetrische Spannungsverläufe mit zwischen den Rändern liegenden Bereichen reduzierter Spannungsspitzen realisieren. So lassen sich auch unsymmetrische Steifigkeitsverläufe mit zwischen den Rändern liegendem Bereich maximaler Steifigkeit und damit minimaler Spannung abbilden. Entsprechend ist ebenfalls möglich, dass die jeweiligen Bereiche der Klebefläche hinsichtlich der Komponentenmischungsverhältnisse als Verlauf von einem Rand zu einem anderen Rand oder auch rotationssymmetrisch ausgeführt sind, sofern es der durch die Verformung oder Bewegung der Bauteile zu erwartende Spannungsverlauf in der Klebeverbindung oder die jeweilige Geometrie der zu verklebenden Bauteile erfordern würde.

Indem die jeweiligen Bereiche der Komponentenmischungsverhältnisse nebeneinander in Belastungsrichtung angeordnet sind wird erreicht, dass sich der durch die unterschiedlichen Komponentenmischungsverhältnisse mit den unterschiedlichen Steifigkeiten ergebenden Spannungsverlauf insbesondere in Belastungsrichtung ausrichtet und sich damit kein nundefinierter Spannungsverlauf und damit eine unzuverlässige Klebeverbindung ergeben.

Vorteilhaft überlappen sich die unterschiedlichen Bereiche der Klebefläche und/oder grenzen seitlich aneinander und bilden Übergangsbereiche der Komponentenmischungsverhältnisse. Hiermit wird erreicht, dass sich die Übergänge zwischen den Bereichen begünstigend auf einen eher kontinuierlichen Spannungsverlauf auswirken. Grenzen die Bereiche nur aneinander, ist der Übergang im Spannungsverlauf entsprechend der Bereiche eher sprunghaft ausgeprägt.

Die Klebeverbindung besitzt eine vorteilhafte Ausgestaltung, wobei die Übergangsbereiche der Komponentenmischungsverhältnisse durch Vermischung einen kontinuierlichen Verlauf der mechanischen Eigenschaften aufweisen, wodurch der Spannungsverlauf in der Klebeverbindung begünstigt und eine partielle Überlastung der Klebefläche vermieden und damit einer Zerstörung oder Rissbildung entgegen gewirkt wird.

Indem die jeweiligen Bereiche der Komponentenmischungsverhältnisse nebeneinander in Belastungsrichtung angeordnet werden, wird unabhängig vom Bauteil und der Anordnung der jeweiligen zu verklebenden Überlappung der Bauteile eine Klebeverbindung erreicht, dass der Spannungsverlauf, welcher sich durch die unterschiedlichen Komponentenmischungsverhältnisse ergibt, entsprechend in Belastungsrichtung orientiert ist und damit eine zuverlässige Verklebung erreicht wird. Treten unterschiedliche Belastungen bzw. unterschiedliche Belastungsrichtungen auf, wären hier unterschiedliche Ausrichtungen der Klebeflächen mit unterschiedlichen Anordnungen der Bereiche der Komponentenmischungsverhältnisse entsprechender Belastungsrichtung erforderlich. Hierbei wäre jedoch zu berücksichtigen, dass jeweils nur die in Belastungsrichtung angeordneten Kleberflächen eine zuverlässige Klebeverbindungen ermöglichen, während anders ausgerichtete oder anders angeordnete Klebeflächen für entsprechend andere Belastungsrichtungen keinen Beitrag für die zuverlässige Klebeverbindung der erstgenannten Belastungsrichtung leisten.

Gemäß einer Weiterbildung des erfindungsgemäßen Verfahrens werden die Klebstoffe unterschiedlicher Komponentenmischungsverhältnisse einzeln nacheinander und/oder gemeinsam zeitgleich auf die unterschiedlichen Bereiche der Klebefläche aufgebracht. Der Klebstoff mit dem jeweiligen Komponentenmischungsverhältnis wird für die jeweiligen Bereiche mittels Spritzdüse nacheinander auf ein Bauteil oder beide Bauteile im Bereich der Klebeflächensektoren für die das Komponentenmischungsverhältnis vorher festgelegt wurde, aufgebracht. Damit werden ja nach Umfang der Bereiche mehrere Streifen des Klebstoffs nebeneinander aufgebracht. Beispielsweise wird in der Mitte der Klebefläche Klebstoff mit einem Komponentenmischungsverhältnis höherer Steifigkeit und im Randbereich Klebstoff mit einem Komponentenmischungsverhältnis geringerer Steifigkeit aufgebracht. Dazu kommen beispielsweise unterschiedliche Spritzdüsen mit zugehörigen Vorratsbehältern zum Einsatz.

Gemäß Weiterbildung der Erfindung werden die unterschiedlichen Komponentenmischungen gemeinsam zeitgleich, beispielsweise durch Mehrkanalflächendüsen, aufgetragen. Die Klebstoffaufbringung einzeln nacheinander führt an sich zu dem gleichen Ergebnis wie die gemeinsame zeitgleiche Ausbringung des Klebstoffes. Allerdings hat die gemeinsame zeitgleiche, damit an sich parallele Ausbringung des Klebstoffes den Vorteil, dass der Klebstoff nicht schon in Bereiche abfließen kann, auf die erst anschließend die entsprechende Komponentenmischung aufgebracht werden soll. Zugleich ist eine Zeitersparnis gegeben. Insofern ist diese Lösung insbesondere für das vollautomatische Verkleben prädestiniert.

Zudem werden die unterschiedlichen Bereiche der Klebefläche überlappend und/oder seitlich aneinander grenzend aufgebracht. Es wird dabei ein Übergangsbereiche der Komponentenmischungsverhältnisse gebildet. Es ergeben sich damit Verteile hinsichtlich eines kontinuierlichen Spannungsverlaufes innerhalb der Klebeverbindungen. Sprunghafte Änderungen im Spannungsverlauf werden vermieden. Zuverlässigkeit und Qualität der Klebeverbindungen werden verbessert.

Vorteilhaft wird der Klebstoff mit den jeweils unterschiedlichen Komponentenmischungsverhältnissen für eine gezielte mechanische Eigenschaft und mit gezielter definierter Breite auf die jeweiligen Bereiche der Klebefläche aufgebracht, wodurch sich die Designfreiheit bei der Gestaltung und Dimensionierung der jeweiligen Überlappung der Bauteile für die Verklebung erhöht. Damit lassen sich beispielsweise die Verklebungsfläche bei gleichbleibender Belastung oder bei gleicher Belastung durch größere Überlappungslängen der Bauteile die Klebschichtbreite reduzieren.

Entsprechend der Ausgestaltung des Verfahrens zur Herstellung einer lastoptimierten Klebeverbindung werden Begrenzer an den Überlappungsenden der lastoptimierten Klebeschicht positioniert. Die Begrenzer zwischen den Bauteilen an den Überlappungsenden der lastoptimierten Klebeschicht dienen zur Herausbildung einer definierten und reproduzierbaren Klebeschichtstärke sowie zur räumlichen Begrenzung oder Fixierung der lastoptimierten Klebeschicht. Damit wird die Festigkeit und Sicherheit der Klebeverbindung erhöht. Zudem wird eine reproduzierbare und sichere Herstellung der Klebeverbindung begünstigt. Zugleich kann somit die Qualitätssicherung realisiert werden. Die Begrenzer lassen sich auch so ausführen, dass mittels der durch deren Anordnung erfolgenden räumlichen Begrenzung und örtlicher bzw. flächiger Fixierung vermieden wird, dass Klebstoff außerhalb der Klebefläche abfließt.

Vorteilhaft erfolgt beim Zusammenfügen der Bauteile und/oder beim Auftragen des Klebstoffes mit dem jeweiligen Komponentenmischungsverhältnis eine Vermischung der Übergangsbereiche der Komponentenmischungsverhältnisse. So wird beim Fügen der Bauteile und auch schon beim Auftrag des Klebstoffes durch Vermischung der Übergangsbereiche der Komponentenmischungsverhältnisse ein kontinuierlicher Verlauf der mechanischen Eigenschaften erreicht, wodurch sich ein kontinuierlicherer Spannungsverlauf in der Klebefläche ergibt. Durch den kontinuierlicheren Spannungsverlauf werden Steifigkeitssprünge der Komponentenmischungsverhältnisse innerhalb der Klebefläche zumindest reduziert, wodurch ebenfalls eine partielle Überlastung der Klebefläche vermieden und einer Zerstörung oder Rissbildung entgegen gewirkt wird.

Vorteilhafte Ausführungsbeispiele der Erfindung werden anhand der Zeichnungen näher erläutert.

Es zeigen:
Fig. 1 eine perspektivische Ansicht der aufgebrachten Klebstoffmischungen,
Fig. 2 eine Klebeverbindung mit konzentrisch aufgebrachten Komponentenmischungen auf die Klebefläche,
Fig. 3 zwei verklebte Bauteile 5 mit einer Klebeschicht und Begrenzern und
Fig. 4 eine Klebeverbindung mit dazugehörigem Verlauf der Steifigkeit als Diagramm.

Die Ausführungsbeispiele beziehen sich auf beispielhafte Komponentenmischungen 1, 2, 3, n aus Epoxidharz und entsprechend wirkendem Härter. Die gewählte Anzahl von drei unterschiedlichen Komponentenmischungen 1, 2, 3 ist nicht darauf beschränkt. Die Erfindung umfasst neben den drei dargestellten auch weitere Komponentenmischungen n mit weiteren Komponentenmischungsverhältnissen n für eine Klebeverbindung, wenn beispielsweise je nach Anwendungsfall und Anforderung an die Klebeverbindung eine feinere Abstufung der Steifigkeit der jeweiligen Komponentenmischungen 1, 2, 3, n ausgehend von dem zu erwartenden Spannungsverlauf in der Klebeverbindung erforderlich ist.

Die Anforderung an die Komponentenmischung 1, 2, 3, n umfassen die Einstellbarkeit des Vernetzungsgrades über das Komponentenmischungsverhältnis 1, 2, 3, n und damit über einen großen Bereich einstellbarer Steifigkeiten beziehungsweise der Steifigkeit des Klebstoffes 14.

Zur Herstellung einer überlappenden lastoptimierten Klebeverbindung wird ein 2-Komponenten-Epoxidharz-Klebstoff verwendet, der mittels eines Aminhärters mit primären und sekundären Aminogruppen reagiert. Durch unterschiedliche Reaktionseigenschaften der primären und sekundären Aminogruppen können durch Über- oder Unterdosierung des Härters andere Quervernetzungen im ausgehärteten Klebstoff 14 der jeweiligen Komponentenmischungsverhältnisse 1, 2, 3, n realisiert, durch welche die mechanischen Eigenschaften beeinflusst werden. Die Bauteile 5 bestehen beispielsweise aus Aluminium, die mit diesem Klebstoff 14 mit den jeweiligen Komponentenmischungsverhältnisse 1, 2, 3, n verklebt werden. Entsprechend der Klebstoffeigenschaften bei unterschiedlichen Komponentenmischungsverhältnissen 1, 2, 3, n der werden diese gezielt auf die Klebefläche 4 aufgebracht.

Nach dem Auftragen des Klebstoffes 14 mit seinen jeweiligen Komponentenmischungsverhältnissen 1, 2, 3, n auf die Bauteile auf die Klebefläche 4 sind bis zum Einsetzen der Vernetzung bzw. des Aushärtens des Klebstoffes entsprechend der jeweiligen Spezifikation des Klebstoffes 14 mit seinen Komponenten die Bauteile 5 an der Klebefläche 4 zusammenzufügen. Ist der Klebstoff 14 ausgehärtet kann die Weiterverarbeitung der durch Verklebten zusammengefügten Bauteile 5 erfolgen.

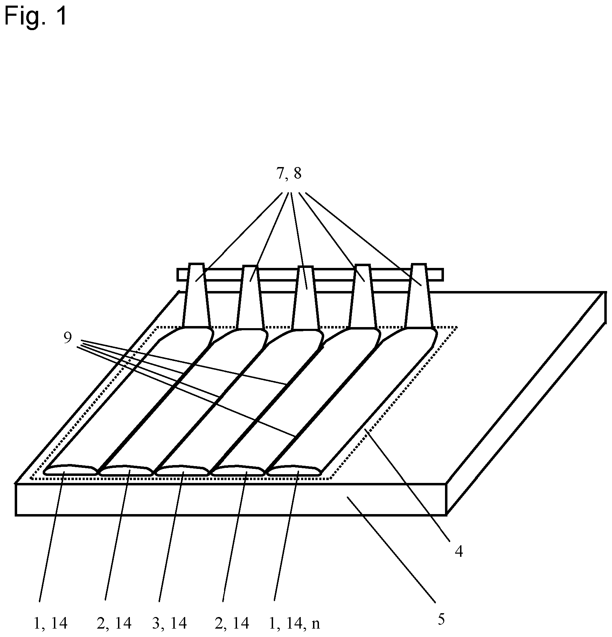

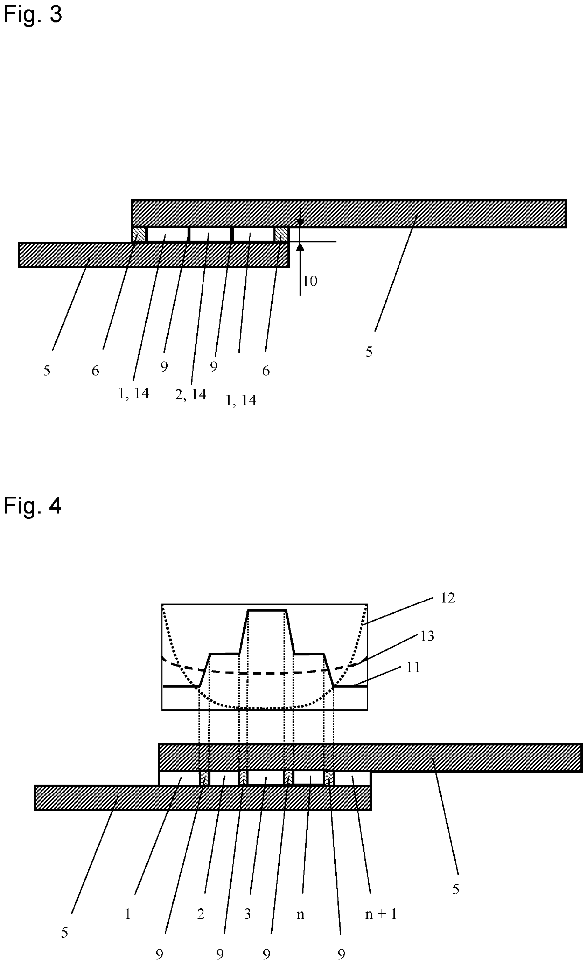

In Figur 1 ist eine Klebeverbindung in Perspektivdarstellung gezeigt. Auf die Klebefläche 4 sind streifenartig unterschiedliche Komponentenmischungen 1, 2, 3, n aufgetragen. Die Streifen der Komponentenmischungen 1, 2, 3, n weisen jeweils unterschiedliche Komponentenmischungsverhältnisse 1, 2, 3, n von Epoxidharz zu Härter auf. Die Komponentenmischung Komponentenmischung 1 weist eine geringere Steifigkeit als die Komponentenmischung Komponentenmischung 2 auf. Die Komponentenmischung Komponentenmischung 2 weist wiederum mit einer mittleren Steifigkeit eine geringere Steifigkeit als die Komponentenmischung Komponentenmischung 3 auf, die hier mit einer hohen Steifigkeit die höchste Steifigkeit aufweist. Die Komponentenmischungen 1, 2, 3, n werden streifenartig auf das Bauteil 5 aufgetragen. Das Aufbringen kann gemeinsam zeitgleich bzw. einzeln nacheinander erfolgen. Hier ist das gemeinsam zeitgleiche Aufbringen von Komponentenmischungen 1, 2, 3, n dargestellt. Die Komponentenmischungen 1, 2, 3, n werden mittels Mehrfachdüse 7 gemeinsam zeitgleich parallel aufgebracht. Dabei treten zeitgleich oder im Verlauf zeitlich versetzt aus den Einzeldüsen 8 die unterschiedlichen Komponentenmischungen 1, 2, 3, n aus. Auf diese Weise wird vermieden, dass Klebstoff 14 in Bereiche fließt, die beim seriellen also einzelnen nacheinander folgenden Aufbringen erst anschließend mit Klebstoff versehen werden. Damit kann auch Klebstoff geringer Viskosität verwendet werden. Nach dem Aufbringen der Komponentenmischungen 1, 2, 3, n werden die Bauteile 5 zusammengefügt, wie in Figur 3 dargestellt. Die Komponentenmischungen 1, 2, 3, n können auf eines oder beide Bauteile 5 aufgebracht werden. In der Regel ist das Aufbringen auf ein Bauteil 5 ausreichend.

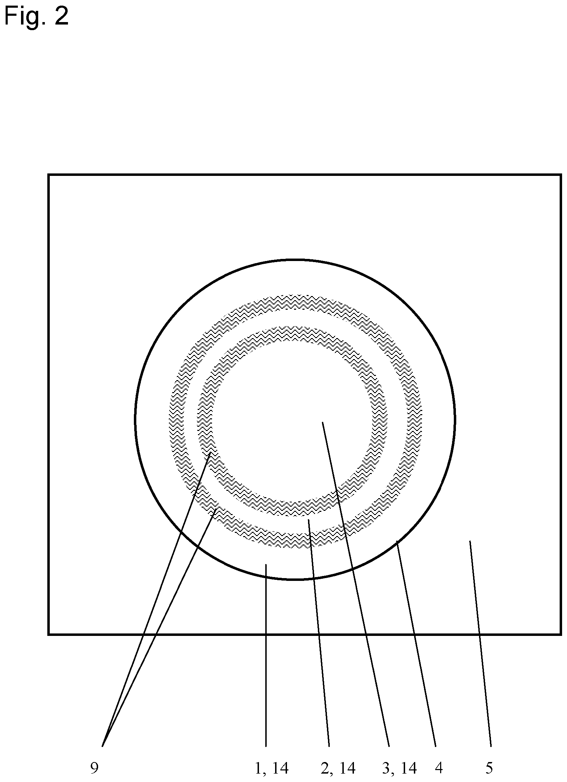

Figur 2 zeigt in der Draufsicht eine Klebeverbindung mit auf die Klebefläche konzentrisch aufgebrachten Komponentenmischungen 1, 2, 3, n. Am Rand treten je nach Belastung die höheren Spannungen auf. Entsprechend wird hier die Komponentenmischung Komponentenmischung mit geringer Steifigkeit 1 verwendet. In der Mitte kommt die Komponentenmischung Komponentenmischung mit hoher Steifigkeit 3 zum Einsatz. Zwischen diesen beiden Bereichen kommt Komponentenmischung Komponentenmischung mit mittlerer Steifigkeit 2 zum Einsatz. In den Bereichen, in denen die Komponentenmischungen 1, 2, 3, n aneinandergrenzen, wird bereits beim Auftragen des Klebstoffes 14 und später beim Fügen der Bauteile 5 eine nachträgliche Vermischung auf der Klebfläche 4 vorgenommen, so dass ein Übergangsbereich 9 von Komponentenmischung 1 zu Komponentenmischung 2 und von Komponentenmischung 2 zu Komponentenmischung 3 herausgebildet wird. Damit gehen in diesem Übergangsbereich 9 auch die Eigenschaften fließend von der Komponentenmischung 1 zur Komponentenmischung 2 und von Komponentenmischung 2 zu Komponentenmischung 3 über, was für einen kontinuierlicheren Spannungsverlauf sorgt.

Die Ausführungen zur konzentrischen Klebeverbindung gelten auch für nicht konzentrische Klebeverbindungen, wie beispielsweise eine Längsüberlappungsverklebung zweier langgestreckter Bauteile 5, da hier ausgehend von den zu erwartenden Spannungsverläufen durch anzunehmende Krafteinwirkungen die gleichen Grundsätze gelten. Dies führt dahin, dass die Bereiche der Klebefläche 4 mit unterschiedlichen Komponentenmischungsverhältnissen 1, 2, 3 des Klebstoffes 14 entsprechend der zu erwartenden Spannungsverläufe ausgehend von einem Bereich geringer Spannung mit hoher Steifigkeit der Komponentenmischung 3 symmetrisch jeweils zu Bereichen höheren Spannung mit jeweils geringer oder geringerer Steifigkeit der Komponentenmischung 1, 2 verlaufen.

Je nach Bauteil kann es jedoch auch bedeuten, dass es für die lastoptimierte Klebeverbindung nur einen einfachen, nicht symmetrischen Verlauf gibt, welcher von einem Bereich geringer Spannung mit hoher Steifigkeit der Komponentenmischung 3 zu dem Bereich höherer Spannung mit jeweils geringer oder geringerer Steifigkeit der Komponentenmischung 1, 2 verläuft.

Dabei lässt es die lastoptimierte Klebeverbindung und das Verfahren zur Herstellung zu, dass je nach Material und Anforderung eine Vielzahl von Einzelbereichen unterschiedlicher Spannung gebildet und mit unterschiedlicher Steifigkeit der Komponentenmischung 1, 2 , 3 nebeneinander für einen resultierenden Spannungsverlauf aufgetragen werden.

Figur 3 zeigt zwei einschnittig überlappende und miteinander verklebte Bauteile 5 mit einer Klebeschicht und Begrenzern 6. Es sind zwei unterschiedliche Komponentenmischungen 1, 2 dargestellt. Die Steifigkeit der jeweiligen Klebstoffschicht wird durch den zugehörigen Schubmodul bestimmt. Um definierte Eigenschaften der Klebeverbindung zu realisieren ist es daher wichtig, eine bestimmte Schichtdicke 10 der Klebeschicht zu realisieren. Dazu werden hier im Randbereich der Verklebung Begrenzer 6 angeordnet. Die Begrenzer 6 dienen hier gleichzeitig dazu, dass die Komponentenmischung 1 im Randbereich nicht abfließt. Damit können Komponentenmischungen 1, 2 geringer Viskosität verwendet werden. Die Begrenzer 6 können so ausgeführt werden, dass sie einfach entfernbar sind, indem ein Material gewählt wird, was schlecht verklebbar ist z.B. PTFE oder aber als Schutz der Klebeschicht in dieser verbleiben. Nach einem möglichen Entfernen kann ggf. der entstandene Freiraum mit einer entsprechenden Komponentenmischung 1, 2, 3, n, oder einem Dichtmittel verfüllt werden.

Figur 4 zeigt eine Klebeverbindung mit drei unterschiedlichen Komponentenmischungen 1, 2, 3, n, n+1 zur Verbindung der Bauteile 5 mit einem dazugehörigen Diagramm des Verlaufes der Steifigkeit des Klebstoffes 11 und des Spannungverlaufes in der Klebeschicht ohne Anpassung der Steifigkeit 12 und den Spannungsverlauf in der Klebeschicht mit Anpassung der Steifigkeit 13. In dem Diagramm sind der prinzipielle Verlauf der Steifigkeit des Klebstoffes 11 als tatsächlicher Verlauf mit seinen Abstufungen zwischen den jeweiligen Komponentenmischungen 1, 2, 3, n, n+1 des Klebstoffes 14 über die Breite der Verklebung dargestellt. Zwischen den einzelnen Komponentenmischungen 1, 2, 3, n, n+1 sind Übergangsbereiche 9 herausgebildet, die durch eine Vermischung der Komponentenmischung 1, 2, 3, n, n+1 in den Bereichen, in denen sie aneinander angrenzen, realisiert werden. Im Übergangsbereich 9 erfolgt beim Klebstoffauftrag sowie bei Zusammenfügen also dem Anordnen der Bauteile 5 zu Verkleben eine Vermischung der jeweiligen Komponentenmischungsverhältnisse 1, 2, 3, n. Dabei ergibt sich ein kontinuierlicherer Spannungsverlauf zwischen den einzelnen Komponentenmischungsverhältnisse 1, 2, 3, n und damit ein kontinuierlicher Verlauf der mechanischen Eigenschaften. Die Vermischung kann auch aktiv herbeigeführt werden. Durch die sich ergebende Abstufung der Steifigkeit der Komponentenmischungen 1, 2, 3, n, n+1 erfolgt eine Vergleichmäßigung der Spannungen in der Verklebung. Hier ist der prinzipielle Spanungsverlauf jeweils kontinuierlich für eine Klebeschicht ohne Variation der Steifigkeit 12 mit einem Klebstoff 14 dargestellt. Wenn im Bereich hoher Spannungen in der Klebeschicht 12 der Klebstoff 14 eine geringe Steifigkeit aufweist, reduziert sich die Spannung an den Überlappungsenden und Klebstoffbereiche in der Mitte werden stärker belastet, was die Beanspruchung der Klebstoffschicht und des Bauteils 5 reduziert. Die als n und n+1 bezeichneten Komponentenmischungen entsprechen in diesem Beispiel der Steifigkeit der Komponentenmischungen 1 und 2. Sie können in Abhängigkeit der jeweiligen Anwendung jedoch auch andere Steifigkeiten besitzen.

Ein nicht dargestelltes Beispiel für eine Ausführung der Klebefläche hinsichtlich der Komponentenmischungsverhältnisse als Verlauf von einem Rand zu einem anderen lässt sich so darstellen, dass an einem Rand das Komponentenmischungsverhältnisse eine geringe Steifigkeit besitzt und entsprechend daneben in Belastungsrichtung beispielsweise fünf weitere Komponentenmischungsverhältnisse bis hin zu einem Komponentenmischungsverhältnis mit entsprechend höchster Steifigkeit angeordnet werden.

Entsprechend lässt sich ein nicht dargestelltes Beispiel für eine Ausführung der Klebefläche hinsichtlich der Komponentenmischungsverhältnisse als unsymmetrischer Verlauf darstellen, wobei im Bereich der Bauteilüberlappung auf der Klebefläche nicht mittig ein Bereich mit einem Komponentenmischungsverhältnis hoher Steifigkeit angeordnet ist und jeweils daneben bis zum Rand der Klebefläche weitere Bereiche mit Komponentenmischungsverhältnissen angeordnet werden, welche im Verlauf zum Rand jeweils eine niedrigere Steifigkeit besitzen, wobei auf einer Seite zumindest ein Teilbereich mit einem Komponentenmischungsverhältnis mehr als auf der anderen Seite angeordnet ist.

Mittels des Verfahrens und der Art der Verklebung lassen sich problemlos auch Bauteile 5 aus unterschiedlichen Materialen, mit unterschiedlicher Materialeigenschaften und mit unterschiedlichen Geometrien und damit bedingten anderen mechanischen Eigenschaften optimieren. Beispielsweise wird der 2K-Epoxidklebstoff UHU PLUS Endfest verwendet, wobei damit Fügeteile aus Aluminium, welche durch Oberflächenstrahlbehandlung Korund EKL90 nach DIN1465 vorbehandelt wurden, verklebt werden. Ergänzend dazu wurden in diesem konkreten Beispiel die zu verklebenden Oberflächen haftungsfördernd vorbehandelt.

So konnte eine lastoptimierte Klebeverbindung realisiert werden, die bei großen Überlappungslängen eine bis zu 50 % höhere Bruchkraft als Standardverklebungen gleicher Geometrie und Vorbehandlung aufweisen. Die Bruchkraft, also die Festigkeit konnte bei einschnittigen Überlappungsverklebungen bei 50mm Überlappungslänge von 10,4 kN (8,3 MPa) auf 15,5 kN (12,4 MPa) durch eine optimale Graduierung gesteigert werden.

### Zusammenstellung der Bezugszeichen

1 - erstes Komponentenmischungsverhältnis, Komponentenmischung mit geringer Steifigkeit
2 - zweites Komponentenmischungsverhältnis, Komponentenmischung mit mittlerer Steifigkeit
3 - drittes Komponentenmischungsverhältnis, Komponentenmischung mit hoher Steifigkeit
n - weiteres Komponentenmischungsverhältnis, weitere Komponentenmischung 4 - Klebefläche
5 - Bauteil
6 - Begrenzer
7 - Mehrfachdüse
8 - Einzeldüse
9 - Übergangsbereich
10 - Schichtdicke
11 - Verlauf der Steifigkeit des Klebstoffes
12 - Spannungsverlauf in der Klebeschicht ohne angepasste Steifigkeit
13 - Spannungsverlauf in der Klebeschicht mit angepassten Steifigkeit
14 - Klebstoff

## Patentansprüche

1. Lastoptimierte Klebeverbindung zur überlappenden Verbindung von zumindest zwei Bauteilen (5) unter Verwendung eines einzigen Klebstoffes (14), der mindestens zwei Komponenten umfasst, wobei die Komponenten miteinander vermischt sind und der Klebstoff (14) auf zumindest einem der Bauteile (5) zumindest im Bereich der Überlappung der Bauteile (5) als Klebefläche (4) aufgetragen ist und die Bauteile (5) entsprechend überlappend zusammengefügt sind und der Klebstoff (14) aushärtbar ist,
**dadurch gekennzeichnet,**
**dass** der Klebstoff ein Epoxidharzklebstoff ist, der unterschiedliche über das Komponentenmischungsverhältnis eingestellte Steifigkeiten entsprechend der Spannungsverteilung in unterschiedlichen Bereichen der Klebefläche besitzt, wobei entsprechend einer mechanischen Beanspruchung der Klebeverbindung in zwei, drei oder mehreren Bereichen der Klebefläche (4) der Klebstoff (14) in diesen Bereichen der Klebefläche (4) entsprechende Komponentenmischungsverhältnisse (1, 2, 3, n) besitzt.

2. Klebeverbindung nach Anspruch 1,
**dadurch gekennzeichnet,**
**dass** die jeweiligen Bereiche der Klebefläche (4) hinsichtlich der Komponentenmischungsverhältnisse symmetrisch oder als Verlauf oder rotationssymmetrisch ausgeführt sind.

3. Klebeverbindung nach Anspruch 1,
**dadurch gekennzeichnet,**
**dass** die jeweiligen Bereiche der Komponentenmischungsverhältnisse (1, 2, 3, n) nebeneinander in Belastungsrichtung angeordnet sind.

4. Klebeverbindung nach einem der Ansprüche 1 und 2,
**dadurch gekennzeichnet,**
**dass** sich die unterschiedlichen Bereiche der Klebefläche (4) überlappen und/oder seitlich aneinander grenzen und sich Übergangsbereiche (9) der Komponentenmischungsverhältnisse (1, 2, 3, n) bilden.

5. Klebeverbindung nach einem der Ansprüche 1 bis 3,
**dadurch gekennzeichnet,**
**dass** die Übergangsbereich (9) der Komponentenmischungsverhältnisse (1, 2, 3, n) durch Vermischung einen kontinuierlichen Verlauf der mechanischen Eigenschaften aufweisen.

6. Verfahren zur Herstellung einer lastoptimierten Klebeverbindung zur überlappenden Verbindung von zumindest zwei Bauteilen (5) unter Verwendung eines einzigen Klebstoffes (14), der mindestens zwei Komponenten umfasst und der Klebstoff (14) auf zumindest einem der Bauteile (5) zumindest im Bereich der Überlappung der Bauteile (5) als Klebefläche (4) aufgetragen wird und die Bauteile (5) entsprechend überlappend zusammengefügt werden und der Klebstoff (14) aushärtet,
**dadurch gekennzeichnet, dass** der Klebstoff ein Epoxidharzklebstoff ist und
dass die Komponenten in jeweils unterschiedlichen Verhältnissen zueinander gemischt werden und der Klebstoff (14) mit den jeweils unterschiedlichen Komponentenmischungsverhältnissen (1, 2, 3, n) in verschiedenen Bereichen der Klebefläche (4) der zu verklebenden Bauteile (5) entsprechend der Beanspruchung der Klebeverbindung aufgebracht werden und nachfolgend die zu verklebenden Bauteile (5) zusammengefügt werden.

7. Verfahren nach Anspruch 6,
**dadurch gekennzeichnet,**
**dass** die jeweiligen Bereiche der Komponentenmischungsverhältnisse (1, 2, 3, n) nebeneinander in Belastungsrichtung angeordnet werden.

8. Verfahren nach einem der Ansprüche 6 oder 7,
**dadurch gekennzeichnet,**
**dass** der Klebstoff (14) mit den jeweils unterschiedlichen Komponentenmischungsverhältnissen (1, 2, 3, n) auf die entsprechenden Bereiche der Klebefläche (4) einzeln nacheinander und/oder gemeinsam zeitgleich aufgebracht werden, wobei die unterschiedlichen Bereiche der Klebefläche (4) überlappend und/oder seitlich aneinander grenzend aufgebracht werden und ein Übergangsbereich (9) der Komponentenmischungsverhältnisse (1, 2, 3, n) gebildet wird.

9. Verfahren nach einem der Ansprüche 6 bis 8,
**dadurch gekennzeichnet,**
**dass** der Klebstoff (14) mit den jeweils unterschiedlichen Komponentenmischungsverhältnissen (1, 2, 3, n) für eine gezielte mechanische Eigenschaft und mit gezielter definierter Breite auf die jeweiligen Bereiche der Klebefläche (4) aufgebracht werden.

10. Verfahren nach einem der Ansprüche 6 bis 9,
**dadurch gekennzeichnet,**
**dass** Begrenzer (6) an den Überlappungsenden der lastoptimierten Klebeschicht positioniert werden.

11. Verfahren zur Herstellung einer Klebeverbindung nach einem der Ansprüche 6 bis 10,
**dadurch gekennzeichnet,**
**dass** beim Zusammenfügen der Bauteile (5) und/oder beim Auftragen des Klebstoffes (14) mit dem jeweiligen Komponentenmischungsverhältnis (1, 2, 3, n) eine Vermischung der Übergangsbereiche (9) der Komponentenmischungsverhältnisse (1, 2, 3, n)erfolgt.

## Claims

1. Load-optimized bond for the overlapping connection of at least two components (5) under usage of a single adhesive (14), that has at least two components, whereby the components are mixed with each other and the adhesive (14) is applied on at least one of the components (5) at least in the area of the overlapping components (5) as an adhesive surface (4) and the components (5) overlap correspondingly and the adhesive (14) is curable. **characterized in**
**that** the adhesive is an epoxy resin adhesive that has different stiffnesses set through the component mixture ratio corresponding to the tension distribution in different areas of the adhesive surface, whereby correspondingly a mechanical stress of the bond in two, three or multiple areas of the adhesive surface (4) of the adhesive (14) in these areas of the adhesive surface (4) has corresponding component mixture ratios (1, 2, 3, n).

2. Bond according to claim 1.
**characterized in**
**that** the respective areas of the adhesive area (4) are symmetrical regarding the component mixture ratios or are designed as a process or rotation-symmetrical.

3. Bond according to claim 1.
**characterized in**
**that** the respective areas of the component mixture ratio (1, 2, 3, n) being arranged next to each other in the direction of stress.

4. Bond according to claim 1,
**characterized in**
**that** the different areas of the adhesive area (4) overlap and/or adjacent to each other and form transition areas (9) of the component mixture ratios (1, 2, 3, n).

5. Bond according to claim 1,
**characterized in**
**that** the transition area (9) of the component mixture ratios (1, 2, 3, n) has a continual process of the mechanical properties through mixture.

6. Procedure for the production of a load-optimized bond for the overlapping connection of at least two components (5) under usage of a single adhesive (14), that has at least two components and the adhesive (14) is applied on at least one of the components (5) at least in the area of the overlapping of the components (5) as adhesive surface (4) and the components (5) are joined overlapping and the adhesive (14) cured.
**characterized in**
**that** the adhesive is an epoxy resin adhesive and that the components are mixed with each other in respectively different ratios and the adhesive (14) with the respectively different component mixture ratios (1, 2, 3, n) are added to different areas of the adhesive surface (4) of the components to be glued together (5) corresponding to the stress of the bond and are added to the glued components (5) after each other.

7. Procedure according to claim 6,
**characterized in**
**that** the respective areas of the component mixture ratio (1, 2, 3, n) being arranged next to each other in the direction of stress.

8. Procedure according to claim 6,
**characterized in**
**that** the adhesive (14) is attached with the respectively different component mixture ratios (1, 2, 3, n) on the corresponding areas of the adhesive surface (4) individually after each other and/or together at the same time, whereby the different areas of the adhesive surface (4) are attached overlapping and/or adjacent to each other and a transition area (9) of the component mixture ratios (1, 2, 3, n) is formed.

9. Procedure according to claim 6,
**characterized in**
**that** the adhesive (14) is attached with the respectively component mixture ratios (1, 2, 3, n) for a mechanical property and with a defined width on the respective areas of the adhesive surface (4).

10. Procedure according to claim 6,
**characterized in**
**that** limiters (6) are positioned on the overlapping ends of the load-optimized adhesive layer.

11. Procedure to produce a bond according to one of the claims 6 to 10,
**characterized in**
**that** when adding the components (5) and/or when applying the adhesive (14) with the respective component mixture ratio (1, 2, 3, n), a mixture results of the transition areas (9) of the component mixture ratios (1, 2, 3, n).

## Revendications

1. Liaison adhésive à charge optimale servant à relier par chevauchement au moins deux éléments (5) en utilisant une matière adhésive (14) unique, qui comprend au moins deux composants, les composants étant mélangés les uns aux autres et la matière adhésive (14) étant appliquée sur au moins un des éléments (5), au moins dans la zone de chevauchement des éléments (5), sous la forme d'une surface adhésive (4) et les éléments (5) étant assemblés de manière à se chevaucher de manière correspondante et la matière adhésive (14) pouvant être durcie,
**caractérisée en ce que**
la matière adhésive est un adhésif à base de résine époxyde, qui possède différentes rigidités ajustées par le rapport de mélange de composants en fonction de la répartition des contraintes dans différentes zones de la surface adhésive, la matière adhésive (14) possédant, en fonction d'une contrainte mécanique de la liaison adhésive dans deux, trois ou plusieurs zones de la surface adhésive (4), dans lesdites zones de la surface adhésive (4), des rapports de mélange de composants (1, 2, 3, n) correspondants.

2. Liaison adhésive selon la revendication 1,
**caractérisée en ce que**
les zones respectives de la surface adhésive (4) sont réalisées de manière symétrique ou sous forme de gradient ou à symétrie de révolution relativement aux rapports de mélange de composants.

3. Liaison adhésive selon la revendication 1, **caractérisée en ce que**
les zones respectives des rapports de mélange de composants (1, 2, 3, n) sont disposées l'une à côté de l'autre dans la direction de la charge.

4. Liaison adhésive selon l'une des revendications 1 et 2, **caractérisée en ce que**
les différentes zones de la surface adhésive (4) se chevauchent et/ou sont latéralement contiguës et que des zones de transition (9) se forment entre les rapports de mélange de composants (1, 2, 3, n).

5. Liaison adhésive selon les revendications 1 à 3, **caractérisée en ce que**
par leur imbrication, les zones de transition (9) des rapports de mélange de composants (1, 2, 3, n) présentent une évolution continue des propriétés mécaniques.

6. Procédé de formation d'une liaison adhésive à charge optimale servant à relier par chevauchement au moins deux éléments (5) en utilisant une matière adhésive (14) unique, qui comprend au moins deux composants, et la matière adhésive (14) étant appliquée sur au moins un des éléments (5), au moins dans la zone de chevauchement des éléments (5), sous la forme d'une surface adhésive (4) et les éléments (5) étant assemblés de manière à se chevaucher et la matière adhésive (14) étant durcie,
caractérisé en que la matière adhésive est un adhésif à base de résine époxyde et
que les composants sont mélangés les uns aux autres dans des rapports respectivement différents et que la matière adhésive (14), avec les différents rapports de mélange de composants (1, 2, 3, n) respectifs, est appliquée dans des zones différentes de la surface adhésive (4) des éléments (5) à coller en fonction de la contrainte de la liaison adhésive et que les éléments (5) à coller sont ensuite assemblés.

7. Procédé selon la revendication 6,
**caractérisé en ce que**
les zones respectives des rapports de mélange de composants (1, 2, 3, n) sont disposées l'une à côté de l'autre dans la direction de la charge.

8. Procédé selon l'une des revendications 6 ou 7, **caractérisé en ce que**
la matière adhésive (14), avec les différents rapports de mélange de composants (1, 2, 3, n) respectifs, est appliquée sur les zones correspondantes de la surface adhésive (4) individuellement l'une après l'autre et/ou ensemble au même moment, les différentes zones de la surface adhésive (4) étant appliquées de manière à se chevaucher et/ou latéralement contiguës et une zone de transition (9) des rapports de mélange de composants (1, 2, 3, n) étant formée.

9. Procédé selon l'une des revendications 6 à 8, **caractérisé en ce que**
la matière adhésive (14), avec les différents rapports de mélange de composants (1, 2, 3, n) respectifs, est appliquée sur les zones respectives de la surface adhésive (4) en vue d'obtenir une propriété mécanique spécifique et avec une largeur définie spécifique.

10. Procédé selon l'une des revendications 6 à 9, **caractérisé en ce que**
des limiteurs (6) sont positionnés aux extrémités du chevauchement de la couche adhésive à charge optimale.

11. Procédé de formation d'une liaison adhésive selon l'une des revendications 6 à 10,
**caractérisé en ce qu'**il
se produit une imbrication des zones de transition (9) des rapports de mélange de composants (1, 2, 3, n) lors de l'assemblage des éléments (5) et/ou lors de l'application de la matière adhésive (14) avec les rapports de mélange de composants (1, 2, 3, n) respectifs.
